# EUROPEAN PATENT APPLICATION

(11) **EP 4 765 443 A1**
(43) Date of publication of application: **24.06.2026**
(21) Application number: 24853243.4
(22) Date of filing: 24.04.2024
(51) Int. Cl.: H01M 50/528, H01M 50/30

(54) **SECONDARY BATTERY, BATTERY PACK, AND ELECTRONIC DEVICE**

(30) Priority: 16.08.2023 CN 202322204097 U; 17.04.2024 CN 202420806127 U
(71) Applicant: AESC Jiangsu Co., Ltd., Wuxi, Jiangsu 214443 (CN); AESC HUBEI CO., LTD., Shiyan, Hubei 442002 (CN); AESC ORDOS CO., LTD., Ordos, Inner Mongolia 017200 (CN); AESC Shanghai Co., Ltd., Shanghai 201315 (CN)
(72) Inventor: QIAN, Jia, Wuxi, Jiangsu 214443 (CN); CHE, Peipei, Wuxi, Jiangsu 214443 (CN)
(74) Representative: Becker, Eberhard
(86) International application number: PCT/CN2024/089508
(87) International publication number: WO 2025/035827

(57) **Abstract**

Provided are a secondary battery, a battery pack, and an electronic device. The secondary battery comprises a case, an electrode assembly, and an end cover, wherein the case comprises a side wall, which comprises an opening; the electrode assembly is arranged in the case; and the end cover seals the opening, the periphery of the end cover comprising a surrounding protrusion which protrudes towards the electrode assembly, and the inner radial side of the protrusion comprising an inner peripheral surface. The protrusion supports the electrode assembly, and a channel is provided between the protrusion and the electrode assembly, the channel communicating an inner area enclosed by the inner peripheral surface of the protrusion and an area between the inner peripheral surface of the protrusion and the side wall. By providing a channel in a region where the end cover abuts against a current collecting member, the gas venting rate of the secondary battery can be increased, and the efficiency of electrolyte injection, impregnation, and formation of the secondary battery can also be improved.

## Description

### Technical Field

The disclosure relates to the field of battery technology, and specifically relates to a secondary battery, a battery pack, and an electronic device.

### Description of Related Art

With the development of lithium battery technology, the requirements for the energy density of battery cells are increasing. The secondary battery has become one of the mainstream battery cell forms due to its high assembly efficiency. The fitting between the end cover and the case of the secondary battery may adopt a welding form. During the welding process, in order to prevent the laser from entering the inside of the case and damaging the internal structure of the secondary battery, a surrounding protrusion is generally arranged on the outer periphery of the end cover. The protrusion blocks the laser from entering the inside of the case. Inside the case, the protrusion abuts against the electrode assembly or the current collecting member. As such, the circulation and diffusion speed of gas in the secondary battery is affected, and the pressure relief and exhaust efficiency when the secondary battery undergoes thermal runaway is further affected. The safety performance of the secondary battery is thereby lowered.

### Summary

The disclosure provides a secondary battery, a battery pack, and an electronic device, so as to improve the pressure relief and exhaust efficiency when the secondary battery undergoes thermal runaway and to ensure the safety performance of the secondary battery.

To achieve the above and other related purposes, the disclosure provides a secondary battery including a case, an electrode assembly, and an end cover. The case includes a side wall, and the side wall includes an opening. The electrode assembly is arranged in the case. The end cover seals the opening, a periphery of the end cover includes a surrounding protrusion which protrudes towards the electrode assembly, and an inner radial side of the protrusion includes a protrusion inner peripheral surface. The protrusion supports the electrode assembly, and a channel is provided between the protrusion and the electrode assembly. The channel communicates an inner area enclosed by the protrusion inner peripheral surface and an area between the protrusion inner peripheral surface and the side wall.

In an exemplary embodiment of the secondary battery of the disclosure, a first gap is formed between the electrode assembly and the side wall, a second gap is formed between the end cover and the electrode assembly, and the channel communicates with the first gap and the second gap.

In an exemplary embodiment of the secondary battery of the disclosure, an outer radial side of the protrusion includes a protrusion outer peripheral surface, the channel includes a first recess arranged on a surface of the protrusion facing the electrode assembly, and the first recess is recessed in a direction away from the electrode assembly and extends through the protrusion inner peripheral surface and the protrusion outer peripheral surface.

In an exemplary embodiment of the secondary battery of the disclosure, the first recess extends in a radial direction of the secondary battery.

In an exemplary embodiment of the secondary battery of the disclosure, a side of the electrode assembly facing the opening has a first tab, and the protrusion abuts against the first tab.

In an exemplary embodiment of the secondary battery of the disclosure, a side of the electrode assembly facing the opening has a first tab, the secondary battery further includes a current collecting member, and the current collecting member is at least partially clamped between the protrusion and the electrode assembly and is electrically connected to the first tab.

In an exemplary embodiment of the secondary battery of the disclosure, the channel further includes a through hole arranged at an outer peripheral edge of the current collecting member, an abutting region is formed between the protrusion and the current collecting member, at least a portion of the through hole partially extends to the abutting region, and at least another portion extends to the inner radial side of the protrusion.

In an exemplary embodiment of the secondary battery of the disclosure, at least a portion of the through hole is arranged corresponding to the first recess.

In an exemplary embodiment of the secondary battery of the disclosure, a length of the through hole in a radial direction of the secondary battery is greater than or equal to 1/2 of a length of the abutting region in the radial direction of the secondary battery.

In an exemplary embodiment of the secondary battery of the disclosure, the through hole extends in a radial direction of the current collecting member and penetrates through an outer edge of the current collecting member.

In an exemplary embodiment of the secondary battery of the disclosure, a side of the current collecting member facing the protrusion includes a thickened portion welded and connected to the protrusion.

In an exemplary embodiment of the secondary battery of the disclosure, the thickened portion includes a thickened portion inner peripheral surface facing a side of an axis of the case and a thickened portion outer peripheral surface facing away from a side of the axis of the case. The channel further includes a second recess arranged at the thickened portion, the second recess is recessed towards a side facing away from the protrusion, and the second recess extends through the thickened portion inner peripheral surface and the thickened portion outer peripheral surface.

In an exemplary embodiment of the secondary battery of the disclosure, the secondary battery further includes an explosion-proof valve, and the explosion-proof valve is arranged at the end cover and located in the inner area enclosed by the protrusion inner peripheral surface.

In an exemplary embodiment of the secondary battery of the disclosure, the end cover is provided with a liquid injection hole, and the liquid injection hole is located in the inner area enclosed by the protrusion inner peripheral surface.

In an exemplary embodiment of the secondary battery of the disclosure, the end cover further includes an extension portion surrounding an outer periphery of the protrusion, a side of the side wall located at the opening includes an end surface, and the extension portion overlaps the end surface and is fixed to the end surface by welding. In a thickness direction of the end cover, a height of the protrusion protruding from the extension portion is 2.0 mm to 4.0 mm.

The disclosure further provides a secondary battery including a case, an electrode assembly, a current collecting member, and an end cover. The case includes a side wall, and the side wall includes an opening. The electrode assembly is arranged in the case, and a side of the electrode assembly facing the opening has a first tab. The current collecting member is arranged at a side of the electrode assembly facing the opening, and the current collecting member is electrically connected to the first tab. The end cover seals the opening, an outer periphery of the end cover is provided with a surrounding protrusion protruding towards the electrode assembly, and an inner radial side of the protrusion includes a protrusion inner peripheral surface. The protrusion abuts against the current collecting member, the current collecting member is provided with a channel, and the channel communicates with an inner area enclosed by the protrusion inner peripheral surface and an area between the protrusion inner peripheral surface and the side wall.

In an exemplary embodiment of the secondary battery of the disclosure, the channel includes a through hole arranged at an outer peripheral edge of the current collecting member, an abutting region is formed between the protrusion and the current collecting member, at least a portion of the through hole partially extends to the abutting region, and at least another portion extends to the inner radial side of the protrusion.

In an exemplary embodiment of the secondary battery of the disclosure, the through hole is an elongated through hole extending in a radial direction of the current collecting member.

In an exemplary embodiment of the secondary battery of the disclosure, a length of the through hole in a radial direction of the secondary battery is greater than or equal to 1/2 of a length of the abutting region in the radial direction of the secondary battery.

In an exemplary embodiment of the secondary battery of the disclosure, the through hole extends in a radial direction of the current collecting member and penetrates through an outer edge of the current collecting member.

In an exemplary embodiment of the secondary battery of the disclosure, a side of the current collecting member facing the protrusion includes a thickened portion abutting against and welded and connected to the protrusion, and the thickened portion includes a thickened portion inner peripheral surface facing a side of an axis of the case and a thickened portion outer peripheral surface facing away from a side of the axis of the case. The channel includes a second recess arranged at the thickened portion, the second recess is recessed towards a side facing away from the protrusion, and the second recess extends through the thickened portion inner peripheral surface and the thickened portion outer peripheral surface.

The disclosure further provides a battery pack, and the battery pack includes the secondary battery according to any one of the above.

The disclosure further provides an electronic device, and the electronic device includes the aforementioned battery pack.

In the secondary battery of the disclosure, by arranging a channel between the protrusion and the electrode assembly and making the channel communicate with the inner area enclosed by the protrusion inner peripheral surface and the area between the protrusion inner peripheral surface and the side wall, with such an arrangement, on one hand, the circulation of gas between the inner area enclosed by the protrusion inner peripheral surface and the area between the protrusion inner peripheral surface and the side wall may be accelerated. When the secondary battery undergoes thermal runaway, the gas generated in the area between the protrusion inner peripheral surface and the side wall can enter the inner area enclosed by the protrusion inner peripheral surface through the channel and be discharged from the pressure relief position, so that the secondary battery is ensured to achieve directional pressure relief. Meanwhile, when vacuuming is performed during liquid injection and formation of the secondary battery, the gas in the area between the protrusion inner peripheral surface and the side wall can quickly flow into the inner area enclosed by the protrusion inner peripheral surface through the channel. In this way, the exhaust speed in the secondary battery is accelerated, vacuuming time is saved, and gas retention inside the case is also avoided, so that the vacuuming effect is ensured, and the effects of liquid injection and formation are also ensured. On the other hand, when liquid injection is performed on the secondary battery, the arrangement of the channel can also accelerate the circulation speed of the electrolyte inside the case, so that the liquid injection efficiency of the secondary battery is effectively improved. In addition, the arrangement of the channel between the protrusion of the end cover and the electrode assembly can also reduce the deformation generated during the assembly process of the end cover, which is more beneficial for improving the installation accuracy between the end cover and the case and the stability of the electrical connection between the end cover and the electrode assembly.

### Description of the Drawings

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other drawings can be obtained based on these drawings without an inventive effort.
FIG. 1 is a three-dimensional overall schematic view of a secondary battery according to an embodiment of the disclosure.
FIG. 2 is a cross-sectional view of an overall structure of the secondary battery according to an embodiment of the disclosure.
FIG. 3 is a local enlargement view of an area A in FIG. 2.
FIG. 4 is a partial enlarged view of a channel arranged between a protrusion and an electrode assembly in the embodiment of FIG. 3.
FIG. 5 is a schematic view of an overall structure of an end cover in the secondary battery according to an embodiment of the disclosure.
FIG. 6 is a schematic view of a structure of the channel arranged between the protrusion and a current collecting member in the secondary battery according to an embodiment of the disclosure.
FIG. 7 is a partial enlarged schematic view of the channel arranged between the protrusion and the current collecting member in the embodiment of FIG. 6.
FIG. 8 is a schematic view of installation positions of the end cover and the current collecting member in the embodiment shown in FIG. 6.
FIG. 9 is a schematic view of the installation positions of the current collecting member and the end cover in the secondary battery according to an embodiment of the disclosure.
FIG. 10 is a schematic view of a partial structure of an end cover side in the secondary battery according to another embodiment of the disclosure.
FIG. 11 is a partial installation schematic view of the current collecting member and the protrusion in the embodiment shown in FIG. 10.
FIG. 12 is a schematic view of distribution of through hole on the current collecting member in the secondary battery according to an embodiment of the disclosure.
FIG. 13 is a schematic view of the distribution of the through hole on the current collecting member in the secondary battery according to another embodiment of the disclosure.
FIG. 14 is a three-dimensional schematic view of corresponding arrangement of the through holes and first recesses in the secondary battery according to an embodiment of the disclosure.
FIG. 15 is a schematic view of the partial structure of the end cover side in the secondary battery according to still another embodiment of the disclosure.
FIG. 16 is a partial enlarged view of corresponding positions of the through holes and the first recesses in the embodiment shown in FIG. 15.
FIG. 17 is a schematic view of relative installation positions of a thickened portion and the protrusion in the secondary battery according to an embodiment of the disclosure.
FIG. 18 is a partial enlarged view of corresponding installation positions of a second recess and the protrusion in the embodiment shown in FIG. 17.
FIG. 19 is a structural schematic view of the current collecting member provided with the thickened portion in the secondary battery according to an embodiment of the disclosure.
FIG. 20 is a three-dimensional schematic view of corresponding arrangement of the first recess and the second recess in the secondary battery according to an embodiment of the disclosure.
FIG. 21 is a schematic view of the partial structure of the end cover side in the secondary battery according to an embodiment of the disclosure.
FIG. 22 is a partial enlarged view of the corresponding positions of the first recess and the second recess in the embodiment shown in FIG. 21.
FIG. 23 is a schematic view of an overall structure of a battery pack according to an embodiment of the disclosure.
FIG. 24 is a schematic view of the structure of the battery pack installed on a vehicle according to an embodiment of the disclosure.

### Description of reference numerals of the elements:

100: secondary battery, 110: case, 111: end surface, 112: side wall, 1121: end surface, 113: opening, 120: electrode assembly, 121: first tab, 122: second tab, 123: stacking gap, 130: current collecting member, 131: through hole, 132: thickened portion, 1321: second recess, 1322: thickened portion inner peripheral surface, 1323: thickened portion outer peripheral surface, 133: current collecting body, 140: end cover, 141: protrusion, 1411: first recess, 1412: protrusion inner peripheral surface, 1413: protrusion outer peripheral surface, 142: abutting region, 143: cover body, 145: liquid injection hole, 146: extension portion, 147: cover plate, 150: first gap, 160: second gap, 170: channel, 180: explosion-proof valve, 190: electrode terminal, 200: battery pack, 210: box, 211: first box portion, 212: second box portion, 300: electronic device, 310: working portion.

### Specific Embodiments

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the related art by a person having ordinary skill in the art and the content of the disclosure. Any method, device, and material in the related art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

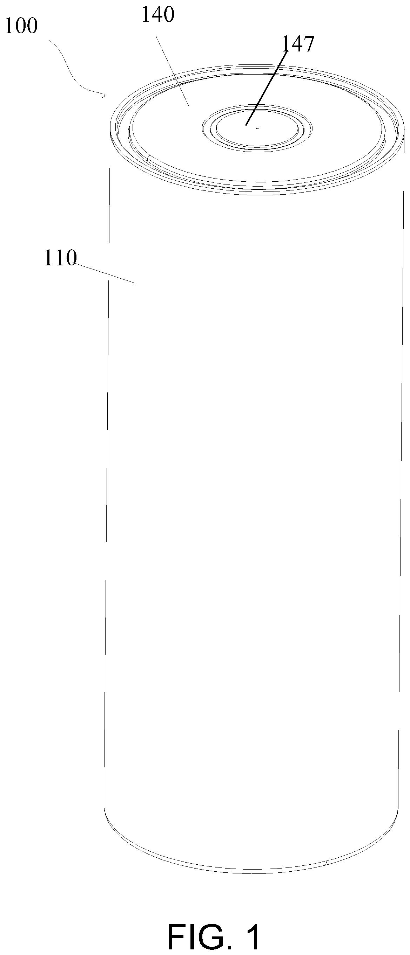

Referring to FIG. 1 to FIG. 24, the disclosure provides a secondary battery 100, a battery pack 200, and an electronic device 300. The secondary battery 100 is provided with a channel 170 between a protrusion 141 of an end cover 140 and an electrode assembly 120, and in this way, the pressure relief and exhaust efficiency are improved when the secondary battery 100 undergoes thermal runaway, and the safety performance of the secondary battery 100 is thus improved. Meanwhile, with the arrangement of the channel 170, the liquid injection efficiency inside the secondary battery 100 is also improved, the time for liquid injection and formation of the secondary battery 100 are saved, and the production efficiency of the secondary battery 100 is enhanced.

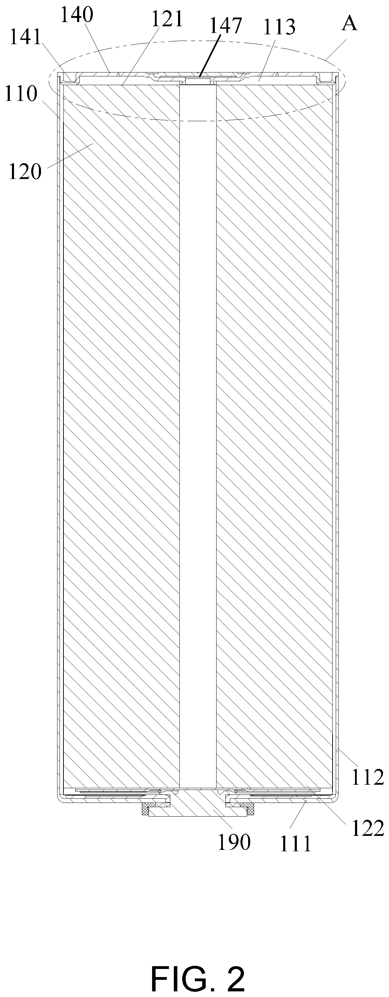

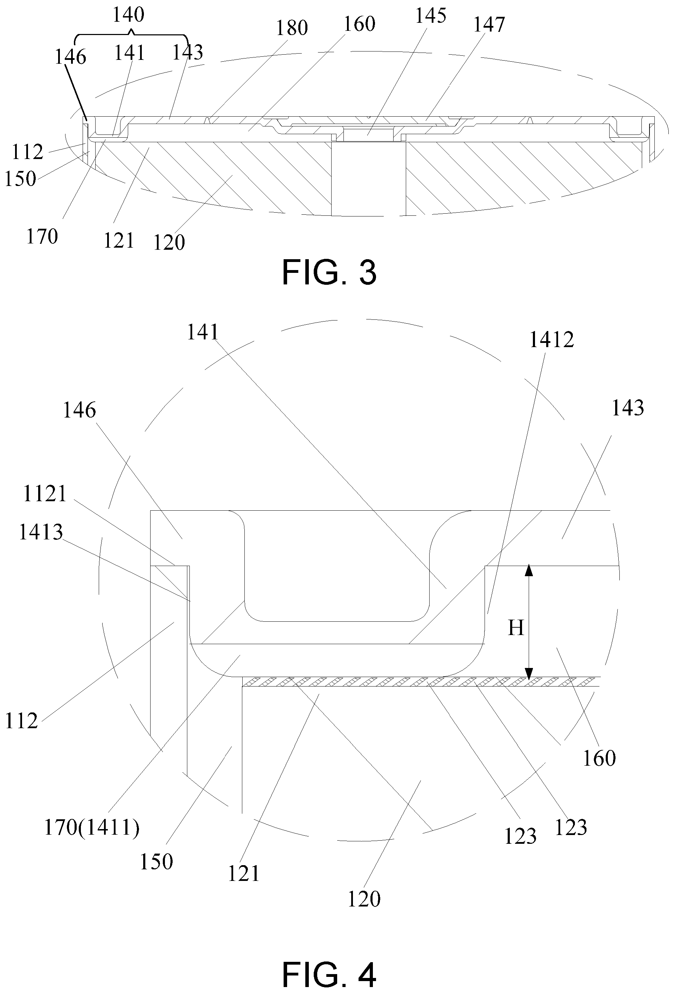

Referring to FIG. 1 and FIG. 3, a structure of the secondary battery 100 is further described. The secondary battery 100 includes: a case 110, the electrode assembly 120, and the end cover 140. An accommodating cavity is formed in the case 110 for accommodating the electrode assembly 120, electrolyte, and other components. The case 110 may have one end open, or may have both ends open. A specific dimension of the case 110 may be determined according to a specific dimension of the electrode assembly 120, for example, meeting specifications such as 4680, 4695, 46120 for a large secondary battery 100. A material of the case 110 may be various, such as copper, iron, aluminum, steel, aluminum alloy, etc. In order to prevent the case 110 from rusting during long-term use, a layer of anti-rust material, such as metallic nickel, may also be plated on a surface of the case 110. Referring to FIG. 2, in an exemplary embodiment of the secondary battery 100 of the disclosure, the case 110 includes an end wall 111 and a side wall 112 surrounding the end wall 111. The end wall 111 is a closed end, and an opening 113 opposite to the end wall 111 is an open end. The end wall 111 and the side wall 112 may be integrally formed and connected, or may be separately formed and then welded and connected together.

As shown in FIG. 2, the electrode assembly 120 is accommodated within the case 110. The electrode assembly 120 is the component where electrochemical reactions occur in the secondary battery 100. One or a plurality of electrode assemblies 120 may be included within the case 110. The electrode assembly 120 is mainly formed by winding or laminating a positive electrode sheet and a negative electrode sheet, and a separator is usually provided between the positive electrode sheet and the negative electrode sheet. The positive electrode sheet includes a positive current collector and a positive active material layer, and the positive active material layer is coated on a surface of the positive current collector. The positive current collector includes a positive coating region and a positive tab connected to the positive coating region. The positive coating region is coated with the positive active material layer, and the positive tab is not coated with the positive active material layer. The negative electrode sheet includes a negative current collector and a negative active material layer, and the negative active material layer is coated on a surface of the negative current collector. The negative current collector includes a negative coating region and a negative tab connected to the negative coating region. The negative coating region is coated with the negative active material layer, and the negative tab is not coated with the negative active material layer. Taking a lithium-ion battery as an example, a material of the positive current collector may be aluminum. The positive active material layer includes a positive active material, and the positive active material may be lithium cobalt oxide, lithium iron phosphate, ternary lithium, or lithium manganate. A material of the negative current collector may be copper. A negative active material layer includes a negative active material, and the negative active material may be carbon or silicon. A main material of the separator may be PP or PE, etc. In order to protect and insulate the electrode assembly 120, an outer portion the electrode assembly 120 may also be covered with an insulating film, and the insulating film may be made of PP, PE, PET, PVC, or other polymer materials.

Referring to FIG. 2, in an exemplary embodiment of the secondary battery 100 of the disclosure, the electrode assembly 120 is sealingly installed in the case 110, a first tab 121 and a second tab 122 are arranged at two ends of the electrode assembly 120 in a length direction, and the first tab 121 and the second tab 122 have opposite polarities. The first tab 121 faces the opening 113 of the case 110, and the first tab 121 is a negative tab. It should be noted that, in other embodiments, the first tab 121 may also be a positive tab, and the second tab 122 may be a negative tab.

Certainly, on the premise of meeting the flow guiding requirements between the electrode assembly 120 and the case 110, in other embodiments of the secondary battery 100 of the disclosure, the first tab 121 and the second tab 122 with opposite polarities may also be both arranged at the same end of the electrode assembly 120 in the length direction, that is, the positive electrode and the negative electrode of the secondary battery 100 are arranged on the same side.

Referring to FIG. 2, in an exemplary embodiment of the secondary battery 100 of the disclosure, a penetrating terminal mounting hole is formed on the end wall 111 of the case 110, and an electrode terminal 190 is sealingly and insulatively installed in the terminal mounting hole. As long as the sealing insulation between the electrode terminal 190 and the end wall 111 can be achieved, the mounting manner of the electrode terminal 190 on the end wall 111 is not limited. The electrode assembly 120 has the second tab 122 on the side facing the end wall 111. One end of the electrode terminal 190 may be directly welded and connected to the second tab 122, or may be conductively connected to the second tab 122 through a current collecting member, which is not specifically limited.

Referring to FIG. 2 to FIG. 5, in an exemplary embodiment of the secondary battery 100 of the disclosure, the end cover 140 is arranged on the side of the opening 113 of the case 110, and an outer edge of the end cover 140 is welded and connected to the side wall 112 of the case 110, so that the end cover 140 is sealingly connected at the opening 113 of the case 110. A structural form of the welded connection between the outer edge of the end cover 140 and the side wall 112 of the case 110 is not limited, as long as the strength requirements and sealing requirements of the welded connection between the case 110 and the end cover 140 are met. The end cover 140 includes a cover body 143 and the protrusion 141, the protrusion 141 is circumferentially arranged on an outer periphery of the cover body 143, the protrusion 141 protrudes towards the direction of the electrode assembly 120, and the protrusion 141 supports the electrode assembly 120. In this embodiment, a side of the protrusion 141 facing the electrode assembly 120 directly abuts against the first tab 121 arranged on an end surface of the electrode assembly 120, so that the protrusion 141 provides axial support for the electrode assembly 120. It should be noted that during the use of the secondary battery 100, regardless of whether the side of the end cover 140 of the secondary battery 100 is placed upward or the side of the end cover 140 is placed downward, as long as a mutual abutting force is directly or indirectly generated between the protrusion 141 and the electrode assembly 120, in the disclosure, it may be interpreted as the protrusion 141 supporting the electrode assembly 120. The protrusion 141 and the cover body 143 may be integrally stamped and formed or may be fixedly connected by welding connection or the like, as long as the performance of the end cover 140 can be ensured. Preferably, in this embodiment, the protrusion 141 and the cover body 143 are an integrally stamped and formed part. In this way, a higher forming and processing efficiency of the end cover 140 may be obtained.

The protrusion 141 and the first tab 121 may or may not be welded and connected, as long as the current conducting requirements between the end cover 140 and the electrode assembly 120 are met. Preferably, in this embodiment, the protrusion 141 and the first tab 121 are welded, so that a more stable and reliable current conducting performance may be obtained between the end cover 140 and the electrode assembly 120. The protrusion 141 may be an annular structure arranged coaxially with the cover body 143 or may be an annular structure not arranged coaxially with the cover body 143, as long as the installation requirements of the end cover 140 are met. Preferably, in this embodiment, the protrusion 141 is a circular ring structure arranged coaxially with the cover body 143. It should be noted that in another embodiment, the protrusion 141 and the first tab 121 may not be welded, and a portion area of the cover body 143 is recessed towards the side of the electrode assembly 120 to abut against the first tab 121 and then be welded. In this way, the current conducting requirements between the end cover 140 and the electrode assembly 120 may also be achieved.

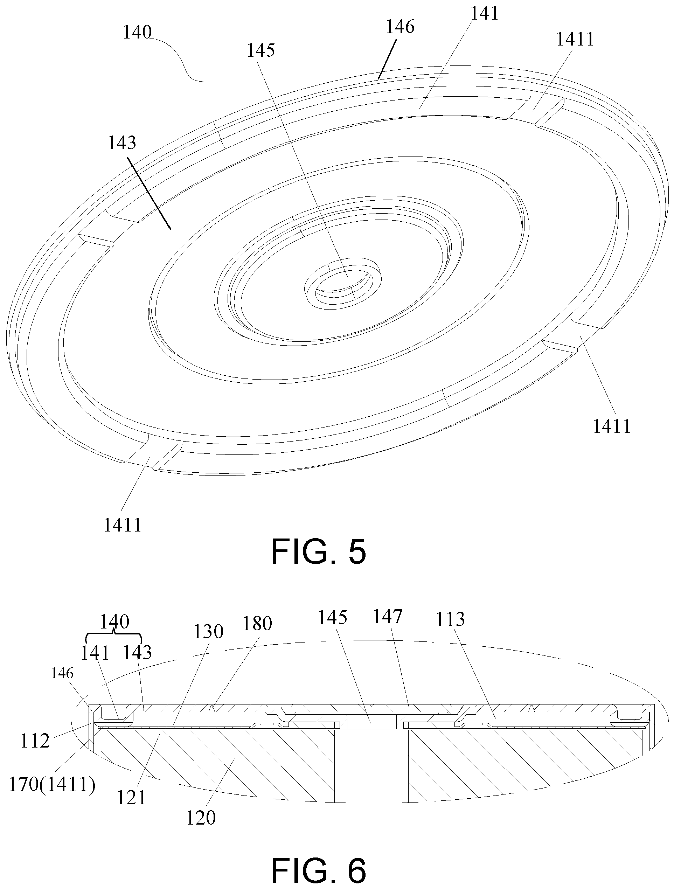

Certainly, in other embodiments of the secondary battery 100 of the disclosure, as shown in FIG. 6 to FIG. 8, a current collecting member 130 may also be arranged between the end cover 140 and the electrode assembly 120, and the protrusion 141 indirectly abuts against the end surface of the electrode assembly 120 through the current collecting member 130, so that the support of the protrusion 141 for the electrode assembly 120 in the disclosure may also be achieved.

Referring to FIG. 3 and FIG. 4, the protrusion 141 includes a protrusion inner peripheral surface 1412 facing an axial side of the case 110, and in the inner area enclosed by the protrusion 141, a second gap 160 is formed by enclosing among the cover body 143, the protrusion inner peripheral surface 1412, and the electrode assembly 120. Inside the case 110, the area between the protrusion inner peripheral surface 1412 and the side wall 112 of the case 110 at least includes: a first gap 150 formed between the electrode assembly 120 and the side wall 112 of the case 110 and an end surface area of the electrode assembly 120 abutting against the protrusion 141. It should be noted that during the charging and discharging cycle of the secondary battery 100, as the electrode assembly 120 swells, the first gap 150 gradually becomes smaller until invisible, but still allows a small amount of gas to pass through. In addition, the end surface area of the electrode assembly 120 abutting against the protrusion 141 is usually formed with a tab stacking gap communicating with an electrode sheet gap inside the electrode assembly 120.

The channel 170 is arranged between the protrusion 141 and the electrode assembly 120, and the channel 170 communicates the inner area enclosed by the protrusion inner peripheral surface 1412 with the area between the protrusion inner peripheral surface 1412 and the side wall 112. In this embodiment, the inner area enclosed by the protrusion inner peripheral surface 1412 is the above-mentioned second gap 160. In this embodiment, the channel 170 communicates the inner area enclosed by the protrusion inner peripheral surface 1412 with the area between the protrusion inner peripheral surface 1412 and the side wall 112, which may be that the channel 170 only communicates the first gap 150 with and the second gap 160, or may be that the channel 170 only communicates the second gap 160 with the end surface area of the electrode assembly 120 abutting against the protrusion 141, or may be that the channel 170 communicates the second gap 160 with the first gap 150 and also communicates the second gap 160 with the end surface area of the electrode assembly 120 abutting against the protrusion 141.

It should be noted that in other embodiments of the secondary battery 100 of the disclosure, as shown in FIG. 6 to FIG. 8, when the protrusion 141 supports the electrode assembly 120 through the current collecting member 130, the second gap 160 is formed by enclosing among the cover body 143 located in the inner area of the protrusion 141, the protrusion inner peripheral surface 1412, and the current collecting member 130. The specific structure of the channel 170 is not limited. When the protrusion 141 abuts against the electrode assembly 120, the channel 170 may be a through groove structure arranged on the protrusion 141, and when the protrusion 141 indirectly abuts against the electrode assembly 120 through the current collecting member 130, the channel 170 may also be a through hole structure arranged on the current collecting member 130 or a through groove or through hole structure arranged on both the current collecting member 130 and the protrusion 141, as long as the inner area enclosed by the protrusion inner peripheral surface 1412 and the area between the protrusion inner peripheral surface 1412 and the side wall 112 can communicate with each other.

The end surface of the electrode assembly 120 facing the end cover 140 side includes the first tab 121, and a stacking gap 123 is formed at the first tab 121. During the charging and discharging cycle of the secondary battery 100, the gas generated by the electrode assembly 120 is exhausted along the electrode sheet gap inside the electrode assembly 120 towards the side of the first tab 121, then enters the inner area enclosed by the protrusion inner peripheral surface 1412, i.e., the inside of the second gap 160, through the stacking gap 123 at the first tab 121, and finally is discharged from a pressure relief position, so as to achieve directional pressure relief of the secondary battery 100. However, since the protrusion 141 of the end cover 140 is supported on the end surface of the electrode assembly 120, the protrusion 141 and the end surface of the first tab 121 are pressed against each other. As such, on one hand, it may be difficult for the gas inside the electrode assembly 120 to enter the inside of the second gap 160 from the stacking gap 123 of the first tab 121, and on the other hand, it also blocks the communication between the first gap 150 and the second gap 160, making it difficult for the gas in the first gap 150 to be discharged through the second gap 160. The exhaust pressure relief efficiency of the secondary battery 100 during thermal runaway is thus affected, and the safety performance of the secondary battery 100 is reduced.

In the embodiments of the disclosure, by arranging the channel 170 between the protrusion 141 of the end cover 140 and the electrode assembly 120, the gas circulation effect between the first gap 150 and the second gap 160 may be improved, when the secondary battery 100 undergoes thermal runaway, the gas in the first gap 150 may quickly enter the second gap 160 through the channel 170, and further, the gas accumulated at the stacking gap 123 of the first tab 121 may also quickly enter the second gap 160 through the channel 170 and then be quickly discharged from a bursting position. Therefore, the gas is prevented from accumulating inside the first gap 150 or at the stacking gap 123 of the first tab 121, which would cause lateral thermal propagation phenomenon in the secondary battery 100, so that it is ensured that the secondary battery 100 may achieve directional pressure relief.

At the same time, since the arrangement of the channel 170 may increase the speed of gas diffusion from the first gap 150 to the second gap 160, it is also beneficial for the gas in the first gap 150 or the gas at the stacking gap 123 of the first tab 121 to be quickly discharged through vacuuming during the assembly process, so that the efficiency of vacuuming during the liquid injection and formation processes of the secondary battery 100 are improved, vacuuming time is saved, and the speed of liquid injection and formation is correspondingly increased. On the other hand, when the secondary battery 100 is undergoing liquid injection, the arrangement of the channel 170 may also accelerate the circulation efficiency of the electrolyte between the second gap 160 and the first gap 150 and between the second gap 160 and the stacking gap 123 of the first tab 121, so that the liquid injection efficiency of the secondary battery 100 is effectively improved, the impregnation time of the electrode assembly 120 is shortened, and the production efficiency of the secondary battery 100 is correspondingly improved. In addition, the arrangement of the channel 170 between the protrusion 141 of the end cover 140 and the electrode assembly 120 may also reduce the deformation generated during the assembly process of the end cover 140, which is more beneficial for improving the installation accuracy between the end cover 140 and the case 110 and the stability of the electrical connection between the end cover 140 and the electrode assembly 120.

Referring to FIG. 3 to FIG. 5, in an exemplary embodiment of the secondary battery 100 of the disclosure, the protrusion 141 further includes a protrusion outer peripheral surface 1413 facing away from the axis side of the case 110. The protrusion outer peripheral surface 1413 may be arranged coaxially with the protrusion inner peripheral surface 1412 or may be arranged non-coaxially, as long as the protrusion outer peripheral surface 1413 is a closed loop curved surface structure. Preferably, in this embodiment, the protrusion outer peripheral surface 1413 and the protrusion inner peripheral surface 1412 are annular surface structures arranged coaxially. The channel 170 includes a first recess 1411, the first recess 1411 is formed on a side of the protrusion 141 facing the electrode assembly 120, the first recess 1411 is recessed in a direction facing away from the electrode assembly 120, and the first recess 1411 extends through the protrusion inner peripheral surface 1412 and the protrusion outer peripheral surface 1413. The extension manner of the first recess 1411 may be various, for example, the first recess 1411 may extend in a curved shape, may also extend in a linear shape, or may extend in a spiral shape or any extension shape that may penetrate through the protrusion inner peripheral surface 141 and the protrusion outer peripheral surface 141. Preferably, in an exemplary embodiment of the secondary battery 100 of the disclosure, the first recess 1411 extends in a radial direction of the secondary battery 100. With such an arrangement, the flow resistance generated when gas or electrolyte flows through the first recess 1411 is relatively small, which is more beneficial for improving the circulation efficiency of gas or electrolyte between the first gap 150 and the second gap 160. Preferably, in this embodiment, four first recesses 1411 are arranged, and the four first recesses 1411 are arranged in an array in a circumferential direction of the protrusion 141, so that the airflow distribution in the circumferential direction is more uniform, which is beneficial for improving the consistency of the air pressure distribution inside the case 110. Certainly, in other embodiments, the first recesses 1411 may also be configured in other numbers and arrangements.

Referring to FIG. 6 to FIG. 8, in an exemplary embodiment of the secondary battery 100 of the disclosure, the secondary battery 100 further includes the current collecting member 130. The current collecting member 130 is arranged in the case 110 and located on a side of the electrode assembly 120 facing the opening 113, the current collecting member 130 is at least partially arranged to abut between the protrusion 141 and the electrode assembly 120, and the current collecting member 130 is electrically connected to the first tab 121. The electrical connection manner may be welding connection or may be conductive adhesive bonding connection, etc. Preferably, in this embodiment, the current collecting member 130 is welded and connected to the first tab 121. The specific position and welding area of the welding connection between the current collecting member 130 and the first tab 121 are not limited, as long as the stable electrical connection requirement between the current collecting member 130 and the first tab 121 may be achieved. A side of the current collecting member 130 facing the end cover 140 abuts against the protrusion 141, so that the protrusion 141 is indirectly supported on the electrode assembly 120 through the current collecting member 130, and a supporting effect is thus formed on the electrode assembly 120 and the current collecting member 130.

In some embodiments of the disclosure, as shown in FIG. 6 to FIG. 8, on the premise that the current collecting member 130 is arranged on the end cover 140 side, the channel 170 may only include the first recess 1411 arranged on the protrusion 141, so that the first recess 1411 may communicate with the inner area enclosed by the protrusion inner peripheral surface 1412 and the area between the protrusion inner peripheral surface 1412 and the side wall 112, that is, communicate the first gap 150 with the second gap 160 in the above embodiments, or communicate the second gap 160 in the above embodiments with the stacking gap 123 of the first tab 121 at the position where the protrusion 141 abuts against the current collecting member 120.

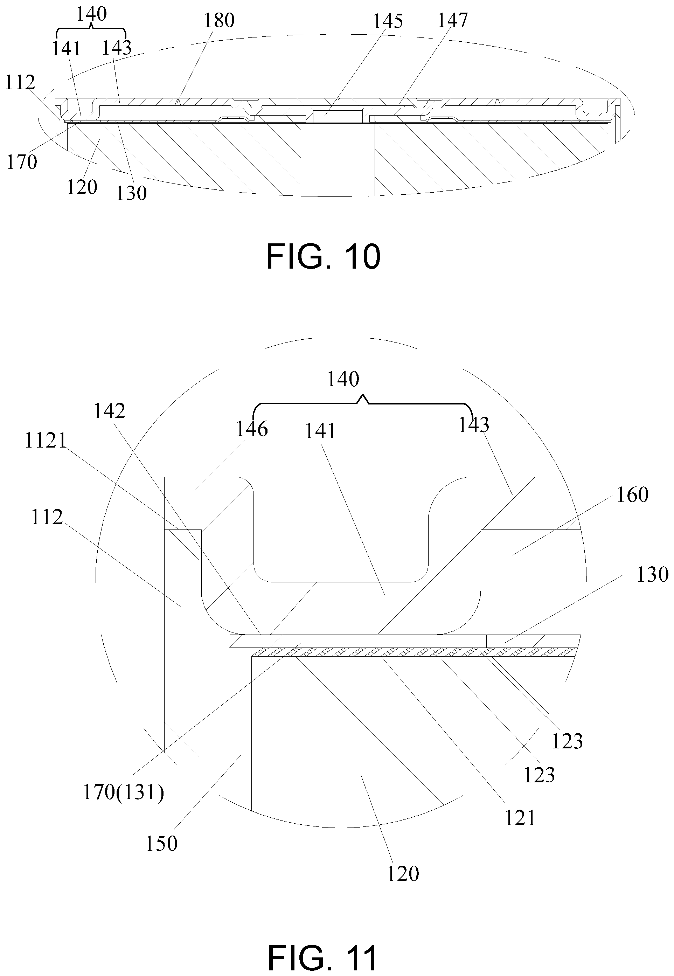

It should be noted that when the protrusion 141 abuts against the current collecting member 130, the current collecting member 130 may correspondingly compress the stacking gap 123 of the first tab 121 below, so that during the charging and discharging process of the secondary battery 100, when the gas generated by the electrode assembly 120 is exhausted along the electrode sheet gap towards the side of the first tab 121, at the corresponding position below the protrusion 141, since the current collecting member 130 and the end surface of the first tab 121 are compressed against each other, it may be difficult for the gas inside the electrode assembly 120 to enter the inside of the second gap 160 from the stacking gap 123 of the first tab 121, as shown in FIG. 11.

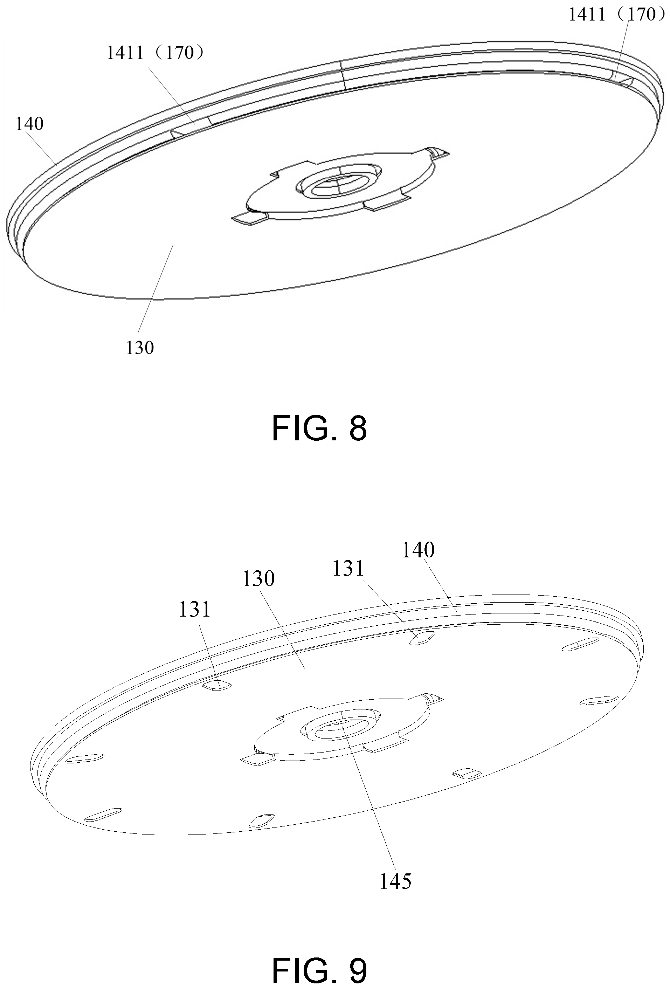

In view of this, in an exemplary embodiment of the secondary battery 100 of the disclosure, as shown in FIG. 9 to FIG. 12, a through hole 131 is further provided on the current collecting member 130. The through hole 131 penetrates through the current collecting member 130 in a thickness direction, and the through hole 131 is provided at an outer peripheral edge of the current collecting member 130. In a height direction of the through hole 131, a side of the through hole 131 facing away from the protrusion 141 communicates with the stacking gap 123 of the first tab 121, and a side of the through hole 131 facing the protrusion 141 communicates with the second gap 160, so that mutual communication between the stacking gap 123 of the first tab 121 at the position where the protrusion 141 abuts against the current collecting member 120 and the second gap 160 is achieved. A specific shape of the through hole 131 is not limited and may be any through hole shape capable of communicating the stacking gap 123 of the first tab 121 with the second gap 160, such as a circular hole, an elongated hole, or a rectangular hole.

Referring to FIG. 9, in this embodiment, a plurality of through holes 131 are arranged on the current collecting member 130, and the plurality of through holes 131 are arranged around the outer peripheral edge of the current collecting member 130. In other embodiments, one through hole 131 may also be arranged, which is not limited. By arranging the through holes 131 on the current collecting member 130, the gas at the stacking gap 123 of the first tab 121 may enter the inside of the second gap 160 through the through holes 131 on the current collecting member 130 below the protrusion 141, serving as the channel 170. In this way, the communication effect between the stacking gap 123 of the first tab 121 and the second gap 160 is improved, that is, the communication effect between the inner area enclosed by the protrusion inner peripheral surface 1412 and the area between the protrusion inner peripheral surface 1412 and the side wall 112 is improved. Meanwhile, the arrangement of the through holes 131 may also reduce the weight of the current collecting member 130, so that the overall weight of the secondary battery 100 is reduced, and the mass density of the secondary battery 100 is increased.

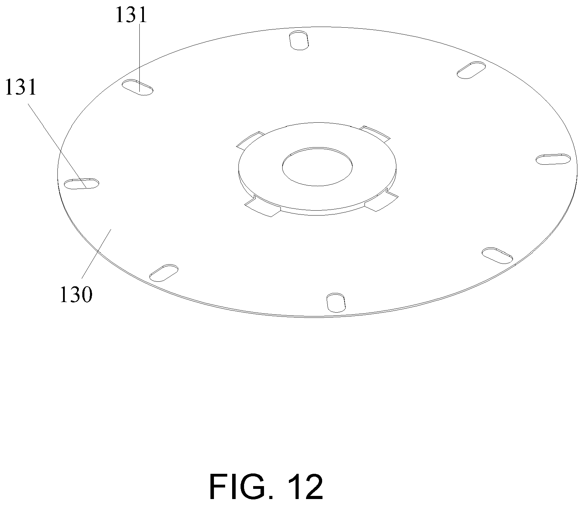

Preferably, referring to FIG. 11 and FIG. 12, in an exemplary embodiment of the secondary battery 100 of the disclosure, the through holes 131 are an elongated through holes 131 extending in the radial direction of the current collecting member 130. With such an arrangement, under the same area, each elongated through hole 131 has a longer extending dimension in the radial direction of the current collecting member 130, so that the circulation efficiency between the stacking gap 123 of the first tab 121 and the second gap 160 may be increased, the gas circulation efficiency between the stacking gap 123 of the first tab 121 and the second gap 160 is thus further improved, and the gas discharge speed at the stacking gap 123 of the first tab 121 and the circulation speed of the electrolyte between the stacking gap 123 of the first tab 121 and the second gap 160 are also increased. In addition, the elongated through hole 131 has a shorter extending dimension in the circumferential direction of the current collecting member 130, so that the occupation of the abutting area between the protrusion 141 and the current collecting member 130 may be decreased, the abutting and pressing effects are improved, and the stability of the conductive connection between the current collecting member 130 and the end cover 140 is enhanced. It should be noted that in this embodiment, a plurality of elongated through holes 131 are arranged on the current collecting member 130, and the plurality of elongated through holes 131 are arranged at the outer peripheral edge of the current collecting member 130 in an array around the center of the current collecting member 130. With such an arrangement, the stacking gap 123 of the first tab 121 may obtain a more uniform exhaust effect in the circumferential direction.

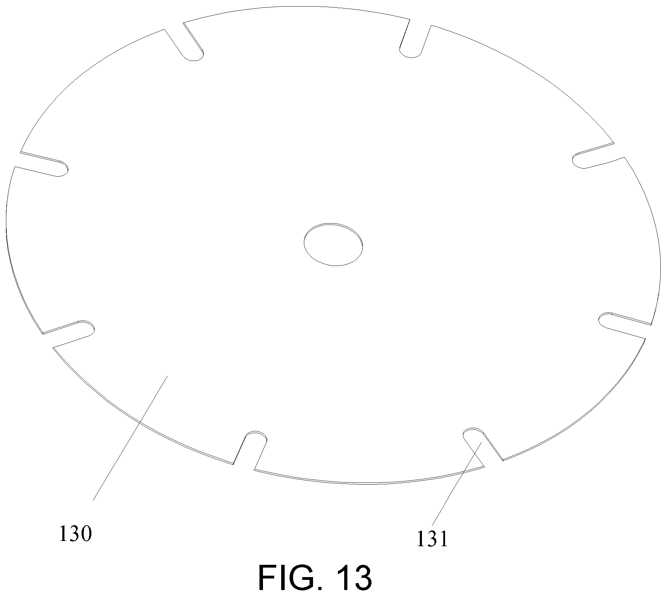

In order to further improve the speed of the gas or electrolyte inside the case 110 circulating in the through hole 131, referring to FIG. 13, in this embodiment, the through hole 131 extends in the radial direction of the current collecting member 130 and penetrates through the outer edge of the current collecting member 130. With such an arrangement, a penetrating opening is formed on the side of the through hole 131 facing the first gap 150. The arrangement of the penetrating opening may not only increase the communication area between the stacking gap 123 of the first tab 121 and the second gap 160 in the radial direction, but also communicate the first gap 150 with the second gap 150, so that the gas in the first gap 150 may be discharged into the second gap 160 through the through hole 131. Therefore, such an arrangement may further improve the speed of the gas in the stacking gap 123 of the first tab 121 being discharged into the inside of the second gap 160 through the through hole 131, and may also increase the speed of the gas in the first gap 150 being discharged into the second gap 160, so that the exhaust and pressure relief effect when the secondary battery 100 undergoes thermal runaway is further improved.

Referring to FIG. 10 and FIG. 11, in an exemplary embodiment of the secondary battery 100 of the disclosure, an abutting region 142 is formed between the protrusion 141 and the current collecting member 130, at least a portion of the through hole 131 extends to the abutting region 142, and at least another portion of the through hole 131 extends to an inner radial side of the protrusion 141. The portion of the through hole 131 located in the abutting region 142 communicates with the stacking gap 123 of the first tab 121, and the portion of the through hole 131 extending to the inner radial side of the protrusion 141 communicates with the second gap 160, so that communication between the stacking gap 123 of the first tab 121 at the position of the abutting region 142 with the second gap 160 is achieved. With such an arrangement, on one hand, the gas generated at the stacking gap 123 of the first tab 121 may be discharged into the second gap 160 through the through hole 131, which may further reduce the retention of gas at the stacking gap 123 of the first tab 121 and ensure the pressure relief and exhaust effect of the secondary battery 100. On the other hand, the portion of the through hole 131 extending to the inner radial side of the protrusion 141 may also reduce the blocking of the end surface of the first tab 121, which is beneficial for the gas in the gaps between electrode sheets inside the electrode assembly 120 to be discharged from the through hole 131 into the second gap 160, and the exhaust and pressure relief effect is thus further improved when the secondary battery 100 undergoes thermal runaway.

In the radial direction of the secondary battery 100, the greater the length of the abutting region 142 between the protrusion 141 and the current collecting member 130, the better the abutting and pressing effect on the current collecting member 130, but correspondingly, the less favorable it is for the gas in the first gap 150 to diffuse outward. Conversely, the gas diffusion effect is better, but the pressing effect is poorer. Preferably, referring to FIG. 11, in an exemplary embodiment of the secondary battery 100 of the disclosure, a length of the through hole 131 in the radial direction of the secondary battery 100 is greater than or equal to 1/2 of a length of the abutting region 142 in the radial direction of the secondary battery 100. With such an arrangement, an improved exhaust speed may be obtained between the stacking gap 123 of the first tab 121 and the through hole 131, and the abutting area between the protrusion 141 and the current collecting member 130 may also be ensured, so that the stability of the electrical connection of the current collecting member 130 is ensured.

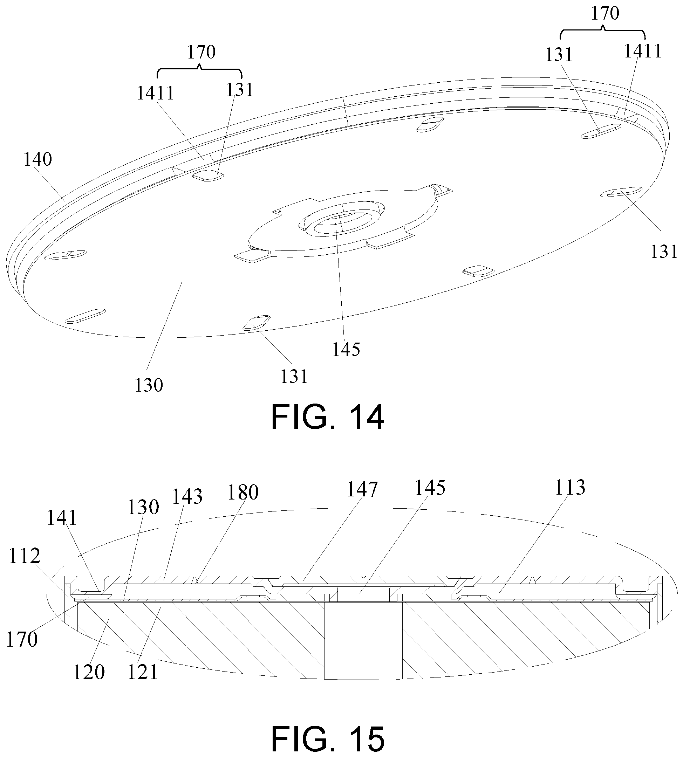

In another embodiment of the disclosure, on the basis that the current collecting member 130 is provided with the through hole 131 in the above embodiments, the protrusion 141 is also provided with the first recess 1411 in the above embodiments, as shown in FIG. 14 to FIG. 16. The positional relationship between the first recess 1411 and the through hole 131 is not limited, for example, the first recess 1411 may partially overlap with the through hole 131 or may be arranged spaced apart from each other in the circumferential direction of the end current collecting member 130, and so on. With such an arrangement, the gas in the first gap 150 and the gas in the stacking gap 123 of the first tab 121 may partially enter the second gap 160 through the first recess 1411 and may also partially enter the second gap 160 through the through hole 131, so that more communication channels 170 may be formed between the second gap 160 and the stacking gap 123 of the first tab 121 and between the second gap 160 and the first gap 150, and that the gas circulation efficiency and the circulation speed of electrolyte between the second gap 160 and the first gap 150 and between the second gap 160 and the stacking gap 123 of the first tab 121 may be further improved.

Further, referring to FIG. 14 to FIG. 16, in an exemplary embodiment of the secondary battery 100 of the disclosure, at least a portion of the through holes 131 provided on the outer peripheral edge of the current collecting member 130 are arranged corresponding to the first recesses 1411. The corresponding arrangement means that, in the thickness direction of the end cover 140, an overlapping area is formed between the orthographic projection of the first recesses 1411 on the current collecting member 130 and the through holes 131, so that the combination of the first recesses 1411 and the through holes 131 communicates with the second gap 160 and the first gap 150 and the second gap 160 and the stacking gap 123 of the first tab 121. The specific size of the overlapping area is not limited. Preferably, in this embodiment, the orthographic projection of the first recesses 1411 on the current collecting member 130 completely covers the width dimension of the through holes 131 in the circumferential direction. With such an arrangement, a larger channel 170 area may be formed between the protrusion 141 and the current collecting member 130, so that the gas or electrolyte inside the case 110 may circulate more rapidly between the first gap 150 and the second gap 160 and between the second gap 160 and the stacking gap 123 of the first tab 121. Therefore, the circulation speed of the gas or electrolyte inside the case 110 may be further improved. It should be noted that the number of the first recesses 1411 and the through holes 131 may be equal or unequal, as long as a portion of the through holes 131 and the orthographic projection of the first recesses 1411 on the current collecting member 130 have overlapping areas.

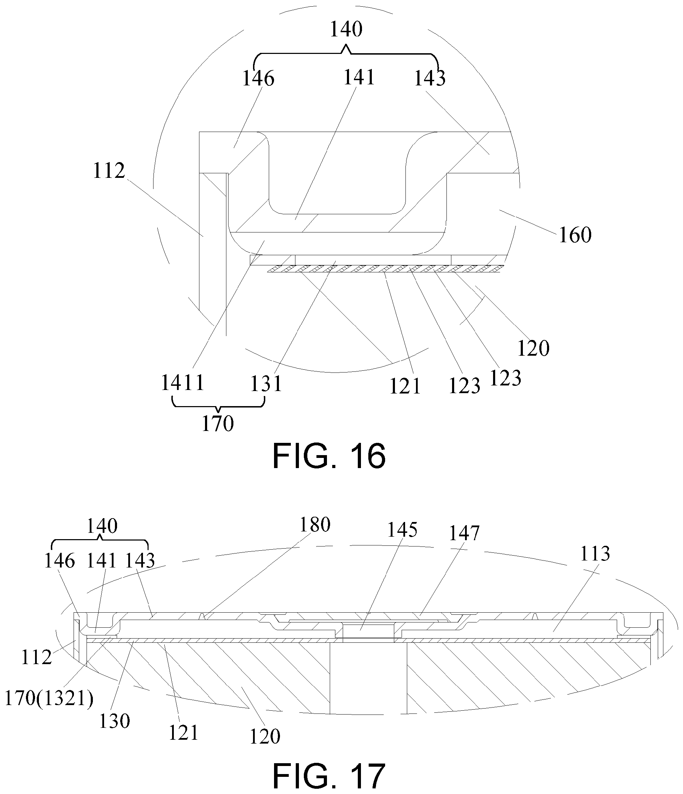

Referring to FIG. 17 to FIG. 19, in an exemplary embodiment of the secondary battery 100 of the disclosure, the current collecting member 130 includes a current collecting body 133 and a thickened portion 132 arranged on a side of the current collecting body 133 facing the protrusion 141, and the thickened portion 132 is located at the outer peripheral edge of the current collecting body 133 and abuts against a side of the protrusion 141 facing the electrode assembly 120. The thickened portion 132 may be an annular structure arranged coaxially with the protrusion 141 or may be an annular structure of other shapes not arranged coaxially with the protrusion 141, as long as an annular abutting region is formed between the protrusion 141 and the thickened portion 132. Preferably, in this embodiment, the thickened portion 132 is arranged coaxially with the protrusion 141, which may facilitate the positioning between the thickened portion 132 and the protrusion 141, and a more favorable abutting region may also be obtained. The connection between the thickened portion 132 and the current collecting body 133 may be an integrally formed connection or may be any connection method such as welding connection. Preferably, in this embodiment, the thickened portion 132 and the current collecting body 133 are connected by welding, which facilitates the processing and forming of the current collecting member 130. By arranging the thickened portion 132 on the current collecting member 130 and making the thickened portion 132 abut against and be welded to the protrusion 141, when welding the protrusion 141 and the current collecting member 130 from the end cover 140 side, the probability of the current collecting member 130 being welded through may be reduced, the welding process window between the end cover 140 and the current collecting member 130 may be improved, and thus the welding efficiency between the end cover 140 and the current collecting member 130 may be correspondingly enhanced under the condition of satisfying the welding quality.

Further, referring to FIG. 17 to FIG. 19 again, in an embodiment of the disclosure, the thickened portion 132 includes a thickened portion inner peripheral surface 1322 facing a side of the axis of the case 110 and a thickened portion outer peripheral surface 1323 facing away from a side of the axis of the case 110, a second recess 1321 is further provided on the thickened portion 132, the second recess 1321 is recessed towards a side facing away from the protrusion 141, and the second recess 1321 extends through the thickened portion inner peripheral surface 1322 and the thickened portion outer peripheral surface 1323. The extension manner of the second recess 1321 may be various, for example, the second recess 1321 may extend in a curved shape, may also extend in a linear shape, or may extend in a spiral shape or any extension manner that may laterally penetrate through the thickened portion inner peripheral surface 1322 and the thickened portion outer peripheral surface 1323. By arranging the second recess 1321 on the thickened portion 132, the gas or electrolyte in the case 110 may flow between the first gap 150 and the second gap 160 and between the second gap 160 and the stacking gap 123 of the first tab 121 through the second recess 1321. Therefore, it may serve to improve the flow efficiency of the gas or electrolyte in the case 110 between the first gap 150 and the second gap 160 and between the second gap 160 and the stacking gap 123 of the first tab 121. Meanwhile, providing the second recess 1321 on the thickened portion 132 may also serve to reduce the weight of the current collecting member 130. Therefore, the overall weight of the secondary battery 100 may be reduced, and the mass density of the secondary battery 100 may be improved.

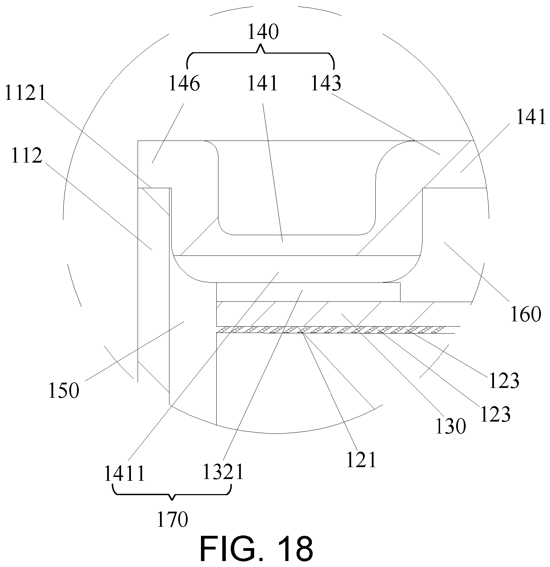

It should be noted that in some embodiments of the disclosure, as shown in FIG. 17 and FIG. 18, on the premise that the first recess 1411 in the above embodiments is not arranged on the protrusion 141 of the end cover 140, the second recess 1321 in the above embodiments may only be provided on the thickened portion 132 of the current collecting member 130. With such an arrangement, the communication between the first gap 150 and the second gap 160 and between the second gap 160 and the stacking gap 123 of the first tab 121 may also be completely achieved only through the second recess 1321, thereby serving to improve the flow effect of the gas or electrolyte inside the case 110 between the first gap 150 and the second gap 160 and between the second gap 160 and the stacking gap 123 of the first tab 121.

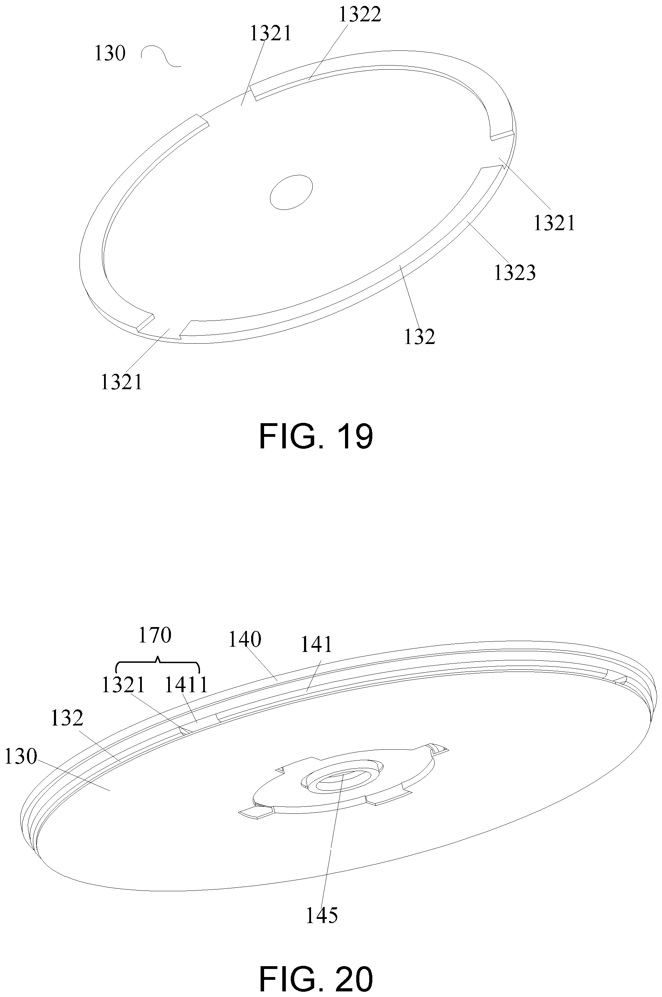

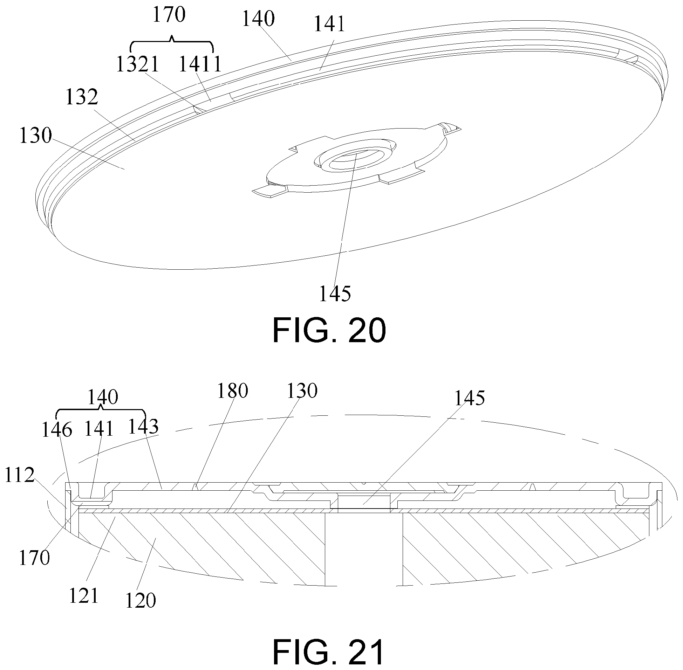

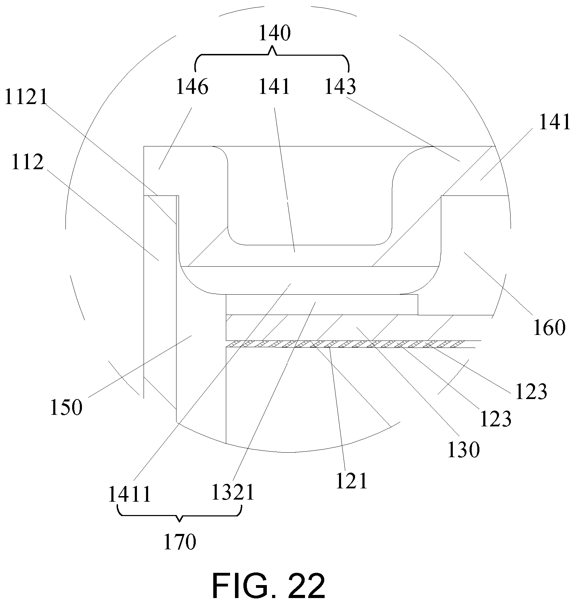

In some other embodiments of the disclosure, as shown in FIG. 20 and FIG. 22, on the basis that the first recess 1411 in the above embodiments is arranged on the protrusion 141, the second recess 1321 is also simultaneously provided on the thickened portion 132. With such an arrangement, the gas or electrolyte in the case 110 may not only flow between the first gap 150 and the second gap 160 and between the second gap 160 and the stacking gap 123 of the first tab 121 through the first recess 1411, but also may flow between the first gap 150 and the second gap 160 and between the second gap 160 and the stacking gap 123 of the first tab 121 through the second recess 1321. Therefore, the flow effect of the gas or electrolyte in the case 110 between the first gap 150 and the second gap 160 and between the second gap 160 and the stacking gap 123 of the first tab 121 may be further improved.

Preferably, in an exemplary embodiment of the secondary battery 100 of the disclosure, the second recess 1321 extends in the radial direction of the secondary battery 100. With such an arrangement, the flow resistance generated when the gas or electrolyte in the case 110 flows through the second recess 1321 is relatively small, which is more conducive to improving the flow speed of the gas or electrolyte inside the case 110 between the first gap 150 and the second gap 160 and between the second gap 160 and the stacking gap 123 of the first tab 121.

In order to further improve the flow speed of the gas or electrolyte between the first gap 150 and the second gap 160 and between the second gap 160 and the stacking gap 123 of the first tab 121, further, referring to FIG. 20 to FIG. 22, in an exemplary embodiment of the secondary battery 100 of the disclosure, the second recess 1321 arranged on the thickened portion 132 and the first recess 1411 are at least partially correspondingly arranged. The correspondingly arrangement means that in the thickness direction of the end cover 140, an overlapping area is formed between the orthographic projection of the first recess 1411 on the current collecting member 130 and the orthographic projection of the second recess 1321, so that the first recess 1411 and the second recess 1321 are combined to communicate with the first gap 150 and the second gap 160. The specific size of the overlapping area is not limited, preferably, in this embodiment, the orthographic projection of the first recess 1411 on the current collecting member 130 completely covers the width dimension of the second recess 1321 in the circumferential direction. With such an arrangement, a larger channel 170 area may be formed between the protrusion 141 and the current collecting member 130, so that the gas or electrolyte inside the case 110 may circulate more rapidly between the first gap 150 and the second gap 160 and between the second gap 160 and the stacking gap 123 of the first tab 121. Therefore, the circulation speed of the gas or electrolyte inside the case 110 may be further improved. It should be noted that the number of the first recesses 1411 and the second recesses 1321 may be equal or unequal, as long as a portion of the second recesses 1321 and the orthographic projection of the first recesses 1411 on the current collecting member 130 have an overlapping area.

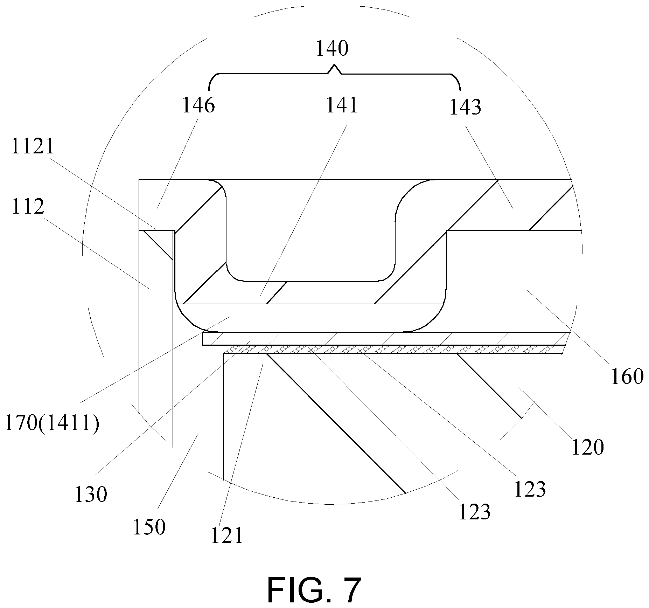

In order to facilitate the welding connection between the end cover 140 and the side wall 112, in an exemplary embodiment of the secondary battery 100 of the disclosure, as shown in FIG. 4 and FIG. 7, the end cover 140 further includes an extension portion 146. The extension portion 146 is arranged surrounding the outer peripheral edge of the protrusion 141, the extension portion 146 extends outwards in the circumferential outer edge of the end cover 140, and an outer diameter of the extension portion 146 is greater than an inner diameter of the side wall 112 of the case 110 at the position of the opening 113. The side wall 112 located at one side of the opening 113 includes an end surface 1121, and when the end cover 140 is installed at the opening 113 of the case 110, the extension portion 146 overlaps the end surface 1121 and is fixedly connected to the end surface 1121 by welding, so as to achieve the sealed welding between the end cover 140 and the case 110. Since the protrusion 141 is arranged on the inner radial side of the extension portion 146, on one hand, the protrusion 141 may serve to block the laser when the extension portion 146 is welded to the end surface of the side wall 112 and thus protects the electrode assembly 120 and the like inside the case 110 from being damaged. On the other hand, when the extension portion 146 is welded to the side wall 112, a portion of the welding pool may be formed on the protrusion outer peripheral surface 141, so a welding fixing point is thereby formed between the side wall 112 and the protrusion 141, and the sealing performance and connection strength between the side wall 112 and the end cover 140 are thus further improved.

Further, in an exemplary embodiment of the secondary battery 100 of the disclosure, as shown in FIG. 4, in the thickness direction of the end cover 140, a height H of the protrusion 141 protruding from the extension portion 146 is 2.0 mm to 4.0 mm. For instance, H may be any value between 2.0 mm to 4.0 mm, such as 2.0mm, 2.5mm, 3.0mm, or 4mm. In this embodiment, the height H is limited to between 2.0 mm to 4.0 mm, so that the protrusion 141 may have a more favorable welding laser blocking effect in the height direction, and at the same time, the second gap 160 may have a more favorable height, so that the gas storage space of the second gap 160 is ensured, and the normal pressure relief requirements of the secondary battery 100 are met.

Referring to FIG. 3 and FIG. 6, in an exemplary embodiment of the secondary battery 100 of the disclosure, the secondary battery 100 further includes an explosion-proof valve 180, and the explosion-proof valve 180 is arranged on the end cover 140 and is located on the side of the protrusion 141 close to the center of the electrode assembly 120. The explosion-proof valve 180 may be any explosion-proof structure such as an explosion-proof score or an explosion-proof valve plate. In this embodiment, the explosion-proof valve 180 is an explosion-proof score arranged on the end cover 140, and the explosion-proof score is located in the inner area enclosed by the protrusion 141. Therefore, the explosion-proof score corresponds to the second gap 160. When thermal runaway occurs in the secondary battery 100, the explosion-proof score will rupture, and the gas accumulated in the second gap 160 is first discharged from the rupture. In the secondary battery 100 of the above embodiments, since the channel 170 is arranged between the first gap 150 and the second gap 160, the gas in the first gap 150 may be quickly discharged into the second gap 160 and then quickly discharged from the rupture of the explosion-proof score, and the high-pressure gas is prevented from remaining in the first gap 150 and causing lateral thermal propagation in the secondary battery 100, resulting in more serious consequences.

Referring to FIG. 3 and FIG. 5, in an exemplary embodiment of the secondary battery 100 of the disclosure, the end cover 140 is further provided with a liquid injection hole 145, and the liquid injection hole 145 is located in the inner area enclosed by the protrusion 141. The liquid injection hole 145 may be arranged in the central area of the end cover 140 or may be offset from the central area of the end cover 140, as long as the liquid injection requirements of the liquid injection hole 145 are met, which is not specifically limited. Preferably, in this embodiment, the liquid injection hole 145 is a circular hole structure arranged coaxially with the end cover 140. Such an arrangement not only facilitates the positioning between the liquid injection equipment and the liquid injection hole 145, but also allows the liquid injection hole 145 to correspond to the central hole of the electrode assembly 120, so that the liquid injection efficiency of the secondary battery 100 is improved. In order to seal the liquid injection hole 145 on the end cover 140, in this embodiment, the secondary battery 100 further includes a cover plate 147, and the cover plate 147 is installed on the end cover 140 and thus seals the liquid injection hole 145. The manner in which the cover plate 147 seals the liquid injection hole 145 is not limited, for example, the cover plate 147 may be adhesively connected at the liquid injection hole 145, may also be snap-fitted at the liquid injection hole 145 through interference fit installation, or may be sealed at the liquid injection hole 145 through sealed welding, as long as the sealing requirements of the liquid injection hole 145 can be met.

It should be noted that the liquid injection hole 145 in the above embodiments may also not be arranged on the end cover 140, but arranged on the end wall 111 side of the case 110. In such an arrangement, the liquid may also be injected into the electrode assembly 120. When the liquid injection hole 145 is arranged on the side of the end wall 111, the liquid injection hole 145 may be arranged on the electrode terminal 190 or may be arranged on the end wall 111, which is not limited.

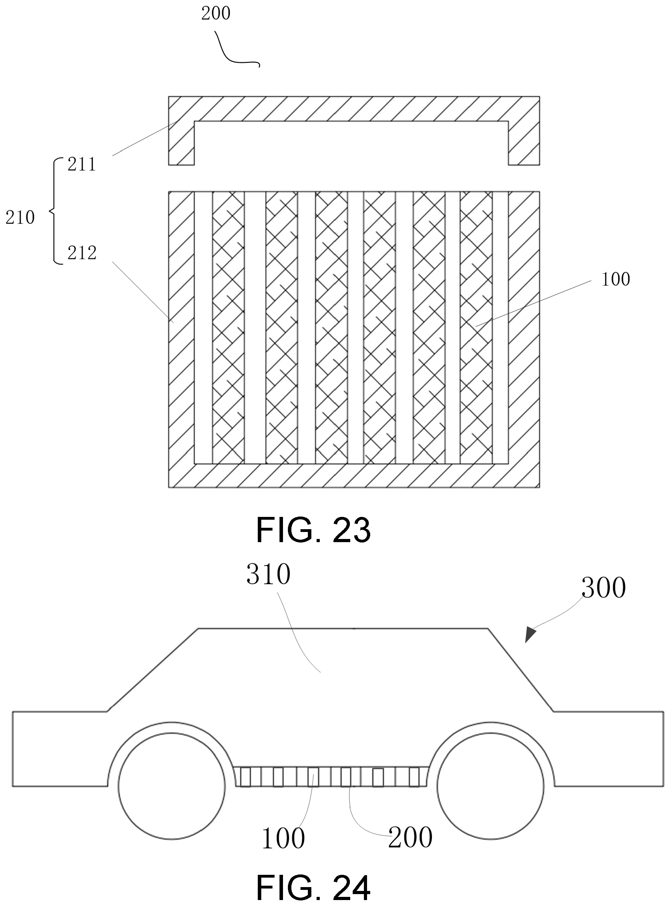

Referring to FIG. 23, in the battery pack 200 provided by an embodiment of the disclosure, the battery pack 200 includes a box 210 and at least one secondary battery 100. The box 210 includes a first box portion 211 and a second box portion 212. The first box portion 211 and the second box portion 212 are mutually covered to form an accommodating space. A plurality of secondary batteries 100 are accommodated in the accommodating space, and the secondary batteries 100 may be connected in series and/or in parallel. The battery pack 200 may be, for example, a battery module, a battery group, etc.

Referring to FIG. 24, in the electronic device 300 provided by an embodiment of the disclosure, the electronic device 300 includes a working portion 310 and the battery pack 200. The working portion 310 is electrically connected to the battery pack 200 to obtain electrical energy support. The working portion 310 may be a unit component that can obtain the electric energy of the battery pack 200 and perform corresponding work, such as a blade rotating unit of a fan, a dust collection working unit of a vacuum cleaner, a wheel driving unit in an electric vehicle, etc. The electronic device 300 may be a vehicle, a mobile phone, a portable device, a notebook computer, a ship, a spacecraft, an electric toy, an electric tool, etc. The vehicle may be but not limited to a fuel vehicle, a gas vehicle, or a new energy vehicle, and the new energy vehicle may be a pure electric vehicle, a hybrid vehicle, or a range-extended vehicle, etc. The spacecraft includes but not limited to an airplane, a rocket, a space shuttle, a spaceship, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic device 300 is not particularly limited in the embodiments of the disclosure. In the electronic device 300 provided by an embodiment of the disclosure, the electronic device 300 is a vehicle, the working portion 310 is the vehicle body, and the battery pack 200 is fixedly mounted on the vehicle body to provide a driving force for the vehicle to achieve the operation of the vehicle.

In the secondary battery of the disclosure, by arranging a channel between the protrusion and the electrode assembly and making the channel communicate with the inner area enclosed by the protrusion inner peripheral surface and the area between the protrusion inner peripheral surface and the side wall, with such an arrangement, on one hand, the circulation of gas in the inner area enclosed by the protrusion inner peripheral surface and the area between the protrusion inner peripheral surface and the side wall may be accelerated. When thermal runaway occurs in the secondary battery, the gas generated in the area between the protrusion inner peripheral surface and the side wall may quickly enter the inner area and be discharged from the rupture position, so that lateral thermal propagation which causes more serious consequences is prevented from occurring in the secondary battery. Meanwhile, when vacuuming is performed during liquid injection and formation of the secondary battery, the gas in the area between the protrusion inner peripheral surface and the side wall may quickly flow into the inner area enclosed by the protrusion inner peripheral surface through the channel. In this way, the exhaust speed in the secondary battery is accelerated, vacuuming time is saved, and gas retention inside the case is also avoided, so that the vacuuming effect is ensured, and the effects of liquid injection and formation are also ensured. On the other hand, when liquid injection is performed on the secondary battery, the arrangement of the channel may also accelerate the circulation speed of the electrolyte inside the case, so that the liquid injection efficiency of the secondary battery is effectively improved. Therefore, some practical problems in the related art are effectively overcome, so that the disclosure exhibits high utilization value and use significance. The above-mentioned embodiments only illustrate the principles and effects of the disclosure, but are not intended to limit the disclosure. A person having ordinary skill in the art can modify or change the abovementioned embodiments without departing from the spirit and scope of the disclosure. Therefore, all equivalent modifications or changes made by a person having ordinary skill in the art without departing from the spirit and technical ideas disclosed in the disclosure shall still be covered by the claims of the disclosure.

## Claims

1. A secondary battery, **characterized in** comprising:
a case, comprising a side wall, the side wall comprising an opening;
an electrode assembly, arranged in the case; and
an end cover, sealing the opening, wherein an outer periphery of the end cover comprises a surrounding protrusion protruding towards the electrode assembly, and an inner radial side of the protrusion comprises a protrusion inner peripheral surface;
wherein the protrusion supports the electrode assembly, a channel is provided between the protrusion and the electrode assembly, and the channel communicates with an inner area enclosed by the protrusion inner peripheral surface and an area between the protrusion inner peripheral surface and the side wall.

2. The secondary battery according to claim 1, **characterized in that** a first gap is formed between the electrode assembly and the side wall, a second gap is formed between the end cover and the electrode assembly, and the channel communicates with the first gap and the second gap.

3. The secondary battery according to claim 1, **characterized in that** an outer radial side of the protrusion comprises a protrusion outer peripheral surface, the channel comprises a first recess arranged on a surface of the protrusion facing the electrode assembly, and the first recess is recessed in a direction away from the electrode assembly and extends through the protrusion inner peripheral surface and the protrusion outer peripheral surface.

4. The secondary battery according to claim 3, **characterized in that** the first recess extends in a radial direction of the secondary battery.

5. The secondary battery according to claim 3, **characterized in that** a side of the electrode assembly facing the opening has a first tab, and the protrusion abuts against the first tab.

6. The secondary battery according to any one of claims 3 to 4, **characterized in that** a side of the electrode assembly facing the opening has a first tab, the secondary battery further comprises a current collecting member, and the current collecting member is at least partially clamped between the protrusion and the electrode assembly and is electrically connected to the first tab.

7. The secondary battery according to claim 6, **characterized in that** the channel further comprises a through hole arranged at an outer peripheral edge of the current collecting member, an abutting region is formed between the protrusion and the current collecting member, at least a portion of the through hole partially extends to the abutting region, and at least another portion extends to the inner radial side of the protrusion.

8. The secondary battery according to claim 7, **characterized in that** at least a portion of the through hole is arranged corresponding to the first recess.

9. The secondary battery according to claim 7, **characterized in that** a length of the through hole in a radial direction of the secondary battery is greater than or equal to 1/2 of a length of the abutting region in the radial direction of the secondary battery.

10. The secondary battery according to claim 7, **characterized in that** the through hole extends in a radial direction of the current collecting member and penetrates through an outer edge of the current collecting member.

11. The secondary battery according to claim 6, **characterized in that** a side of the current collecting member facing the protrusion comprises a thickened portion welded and connected to the protrusion.

12. The secondary battery according to claim 11, **characterized in that** the thickened portion comprises: a thickened portion inner peripheral surface, facing a side of an axis of the case; and a thickened portion outer peripheral surface, facing away from a side of the axis of the case,
the channel further comprises a second recess arranged at the thickened portion, the second recess is recessed towards a side facing away from the protrusion, and the second recess extends through the thickened portion inner peripheral surface and the thickened portion outer peripheral surface.

13. The secondary battery according to claim 1, **characterized in that** the secondary battery further comprises an explosion-proof valve, and the explosion-proof valve is arranged at the end cover and located in the inner area enclosed by the protrusion inner peripheral surface.

14. The secondary battery according to claim 1, **characterized in that** the end cover is provided with a liquid injection hole, and the liquid injection hole is located in the inner area enclosed by the protrusion inner peripheral surface.

15. The secondary battery according to claim 1, **characterized in that** the end cover further comprises an extension portion surrounding an outer periphery of the protrusion, a side of the side wall located at the opening comprises an end surface, the extension portion overlaps the end surface and is fixed to the end surface by welding, and in a thickness direction of the end cover, a height of the protrusion protruding from the extension portion is 2.0 mm to 4.0 mm.

16. A secondary battery, **characterized in** comprising:
a case, comprising a side wall, the side wall comprising an opening;
an electrode assembly, arranged in the case, a side of the electrode assembly facing the opening having a first tab;
a current collecting member, arranged at a side of the electrode assembly facing the opening, wherein the current collecting member is electrically connected to the first tab; and
an end cover, sealing the opening, wherein an outer periphery of the end cover is provided with a surrounding protrusion protruding towards the electrode assembly, and an inner radial side of the protrusion comprises a protrusion inner peripheral surface;
wherein the protrusion abuts against the current collecting member, the current collecting member is provided with a channel, and the channel communicates with an inner area enclosed by the protrusion inner peripheral surface and an area between the protrusion inner peripheral surface and the side wall.

17. The secondary battery according to claim 16, **characterized in that** the channel comprises a through hole arranged at an outer peripheral edge of the current collecting member, an abutting region is formed between the protrusion and the current collecting member, at least a portion of the through hole partially extends to the abutting region, and at least another portion extends to the inner radial side of the protrusion.

18. The secondary battery according to claim 17, **characterized in that** the through hole is an elongated through hole extending in a radial direction of the current collecting member.

19. The secondary battery according to claim 17, **characterized in that** a length of the through hole in a radial direction of the secondary battery is greater than or equal to 1/2 of a length of the abutting region in the radial direction of the secondary battery.

20. The secondary battery according to claim 17, **characterized in that** the through hole extends in a radial direction of the current collecting member and penetrates through an outer edge of the current collecting member.

21. The secondary battery according to claim 16, **characterized in that** a side of the current collecting member facing the protrusion comprises a thickened portion abutting against and welded and connected to the protrusion, the thickened portion comprises: a thickened portion inner peripheral surface, facing a side of an axis of the case; and a thickened portion outer peripheral surface, facing away from a side of the axis of the case,
the channel comprises a second recess arranged at the thickened portion, the second recess is recessed towards a side facing away from the protrusion, and the second recess extends through the thickened portion inner peripheral surface and the thickened portion outer peripheral surface.

22. A battery pack, **characterized in** comprising the secondary battery according to any one of claims 1 to 21.

23. An electronic device, **characterized in** comprising the battery pack according to claim 22.
